# EUROPÄISCHE PATENTSCHRIFT

(11) **EP 0 588 110 B1**
(45) Veröffentlichungstag und Bekanntmachung des Hinweises auf die Patenterteilung: **29.07.1998**
(21) Anmeldenummer: 93113493.6
(22) Anmeldetag: 24.08.1993
(51) Int. Cl.: H04N 5/45

(54) **Verfahren und Schaltung zur Bildkorrektur bei einer Bild-in-Bild-Darstellung von zeilenverkämmten Videosignalen**
Method and device for picture correction in a picture-in-picture display of interlaced video signals
Méthode et dispositif de correction d'image pour un afficheur à capacité d'image dans l'image de signaux entrelacés

(30) Priorität: 18.09.1992 DE 4231308
(43) Veröffentlichungstag der Anmeldung: 23.03.1994
(73) Patentinhaber: SIEMENS AKTIENGESELLSCHAFT, 80333 München (DE)
(72) Erfinder: Scheffler, Günter, Dipl.-Ing., D-80939 München (DE)

(56) Entgegenhaltungen:
- EP-A- 0 411 548
- US-A- 4 249 213
- US-A- 4 724 487
- US-A- 4 890 162
- US-A- 4 910 509

## Beschreibung

Verfahren zur Bildkorrektur bei einer Bild-in-Bild-Darstellung von zeilenverkämmten Fernseh- oder Videosignalen und Schaltungsanordnung zur Durchführung desselben

In Fernsehgeräten und Videorecordern der gehobenen Qualitatsklasse werden heute zunehmend sogenannte Bild-in-Bild-Schaltungen eingesetzt, mit deren Hilfe das Signal einer zweiten Signalquelle als verkleinertes Bild in das Hauptbild eingeblendet werden kann.

Dazu wird das Signal der zweiten Bildquelle digitalisiert und in horizontaler und vertikaler Richtung dezimiert (z.B. jeweils um den Faktor 3). Das so verkleinerte Bild wird in einem Speicher mit einer entsprechenden Schreibtaktrate eingeschrieben. Zur Darstellung auf dem Bildschirm wird es mit einer höheren Lesetaktrate ausgelesen und mit dem Hauptsignal kombiniert.

Einfache Systeme speichern nur ein Halbild der zweiten Quelle. Es kann dann abhängig von der Phase der Bildsignale beider Quellen vorkommen, daß der schnellere Lesezeiger den langsameren Schreibzeiger überholt. Vor dem Überholen werden die Daten des gerade geschriebenen Halbbildes, nach dem Überholen die Daten eines davorliegenden Halbbildes ausgelesen. Dieser Zeitablauf läßt folgende Problematik entstehen:
Die Halbbildfolge der zweiten Quelle sei mit A1, B1, A2, B2... bezeichnet. Um eine exakte Verkammung beider Halbbilder eines Vollbildes zu erreichen, müssen die Halbbilder mit der Bezeichnung A in einem Wiedergaberaster α und die Halbbilder B in einem Wiedergaberaster β dargestellt werden.

Wird nun jedes Halbbild der zweiten Quelle dezimiert und in den Speicher geschrieben, so werden in einem Wiedergaberaster sowohl Daten aus einem Halbbild A als auch aus einem Halbbild B dargestellt. Das bedeutet aber, daß entweder vor oder nach dem Überholen der Schreibadresse durch die Leseadresse ein Halbbildrasterfehler entstehen muß. Das Bild wird verzerrt und es treten Flackererscheinungen mit der Vollbildfrequenz auf.

Zur Vermeidung dieser sehr stark störenden Artefakte kann man dazu übergehen, nur jedes zweite dezimierte Halbbild der zweiten Quelle in den Speicher einzuschreiben. Beim Lesen werden die Daten des eingeschriebenen Halbbildes dann in beiden Wiedergaberastern dargestellt. Dadurch werden die störenden Vertauschungen innerhalb eines Rasters wirkungsvoll vermieden. Diese Vorgehensweise hat jedoch den Nachteil, daß durch die Unterdrückung jedes zweiten Halbbildes der zweiten Quelle die vertikale Auflösung des dezimierten Bildes relativ gering ist. Soll die Auflösung nicht leiden, so wurde bisher der Halbbildspeicher durch einen Vollbildspeicher ersetzt, was eine Verdopplung des Speicheraufwandes bedeutet. Durch geschickte Steuerung der beiden Halbbildspeicher lassen sich Rasterfehler vermeiden.

In der US-4 249 213 sind ein Verfahren und eine Schaltungsanordnung zur Bildkorrektur bei einer Bild-in-Bild-Darstellung beschrieben. Das einzublendende Kleinbild wird in einem Halbbildspeicher zwischengespeichert. Zur Rasterkorrektur werden die Ausleseadressen gegebenenfalls um eine Zeile erhöht oder erniedrigt. Abhängig von der Rasterlage des Großbildes, dem momentan aus dem Halbbildspeicher ausgelesenen Halbbild und der Relation zwischen Auslese- und Einleseadresse am Halbbildspeicher werden unterschiedliche Korrekturmöglichkeiten vorgeschlagen. Der Übergang zwischen verschiedenen Halbbildern im Kleinbild kann bis zu drei Zeilen umfassen.

In der EP-A3-0 411 548 ist eine Schaltungsanordnung zur Bild-in-Bild-Darstellung beschrieben, bei der ein Speicher für das einzublendende Kleinbild derart organisiert ist, daß nur dasjenige dem Großbildraster entsprechende Halbbild gerade gespeichert wird. Hierzu ist ein zusätzlicher Pufferspeicher erforderlich.

Aufgabe der vorliegenden Erfindung ist es, ein Verfahren zur Bildkorrektur bei einer Bild-in-Bild-Darstellung von zeilenverkämmten Fernseh- oder Videosignalen und eine Schaltungsanordnung zur Durchführung desselben anzugeben, bei dem mit dem Aufwand nur eines Halbbildspeichers die volle vertikale Auflösung durch die Darstellung beider Halbbilder des Kleinbildes erreicht wird, ohne daß störende Rasterdefekte auftreten.

Diese Aufgabe wird gelöst durch ein Verfahren zur Bildkorrektur bei einer Bild-in-Bild-Darstellung von zeilenverkämmten Fernseh- oder Videosignalen gemäß den Merkmalen des Patentanspruchs 1 sowie durch eine Schaltungsanordnung gemäß den Merkmalen des Patentanspruchs 2.

Die erfindungsgemäßen Verfahren und die erfindungssgemäße Schaltungsanordnung werden in vorteilhafter Weise in einem Fernseh- oder Videogerät angewendet gemäß Patentanspruch 3.

Die Erfindung soll nun anhand von Ausführungsbeispielen mit Hilfe von Figuren näher erläutert werden. Dabei zeigen:
- Figur 1: eine Ausführungsform der erfindungsgemäßen Schaltungsanordnung,
- Figuren 2a, b, c: Diagramme, die den zeitlichen Verlauf der Schreib- und Lesezeiger in Relation zu den Wiedergaberastern zeigen und
- Figuren 3; 4a, b; 5a, b: den Diagrammen entsprechende, schematisierte Bildschirmdarstellungen.

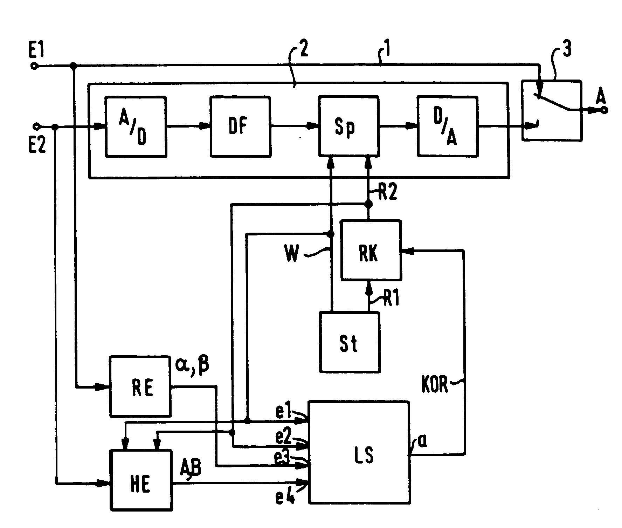

In dem Ausführungsbeispiel für eine erfindungsgemäße Schaltungsanordnung zur Durchführung eines der erfindungsgemäßen Verfahren gemäß Figur 1 ist ein erster Signalpfad 1 mit einem ersten Eingang E1 der Schaltungsanordnung und über einen Schalter 3 mit dem Ausgang A der Schaltungsanordnung verbunden. Am ersten Schaltungsanordnungseingang E1 wird das Signal einer ersten Quelle eingespeist und über den Schaltungsanordnungsausgang A einem nicht dargestellten Bildschirm zugeführt, auf dem es als Großbild mittels aufeinanderfolgender Halbbilder im Zeilensprungverfahren dargestellt werden kann. Das bedeutet, daß ein erstes Halbbild des Großbilds in einen Wiedergaberaster α und ein zweites Halbbild des Großbilds in einen Wiedergaberaster β dargestellt wird.

Figur 1 zeigt außerdem einen zweiten Signalpfad 2, der mit einem zweiten Schaltungsanordnungseingang E2, in den das Signal einer zweiten Quelle eingespeist wird und über den Schalter 3 mit dem Ausgang A der Schaltungsanordnung verbunden ist. Der zweite Signalpfad 2 ist mit einem Analog-Digital-Wandler A/D, einem Dezimationsfilter DF, einem Halbbildspeicher Sp und einem Digital-Analog-Wandler D/A, die in Kette geschaltet sind, gebildet.

Das Signal der zweiten Quelle wird zunächst mittels des Analog-Digital-Wandlers A/D digitalisiert und anschließend mittels des Dezimationsfilters DF bildpunktreduziert; d.h. es wird beispielsweise nur jeder dritte Bildpunkt jeder dritten Zeile durchgelassen, um dann im Halbbildspeicher Sp abgespeichert zu werden.

Zum Einschreiben der Daten ist der Halbbildspeicher Sp von einer Speichersteuerschaltung St mit einem Schreibadressignal W, das im folgenden als Schreibzeiger W bezeichnet wird, beaufschlagt. Beim Einschreiben der Daten eines neuen Halbbildes werden die Daten des vorhergehenden, bereits im Halbbildspeicher Sp abgespeicherten Halbbilds überschrieben.

Gleichzeitig zum Einschreiben können aber auch Daten aus dem Halbbildspeicher Sp mittels eines Lesezeigers R2 ausgelesen werden. Der Lesezeiger R2 ist ein zweites Leseadressignal mit durch eine Leseadressenkorrekturschaltung RK korrigierten Leseadressen, wobei die Leseadressenkorrekturschaltung RK mit einem von der Speichersteuerschaltung St erzeugten ersten Leseadressignal R1 beaufschlagt ist. Die aus dem Halbbildspeicher Sp ausgelesenen Daten werden mittels des Digital-Analog-Wandlers D/A analogisiert und dem Schalter 3 zugeführt, mittels dem sie als Kleinbildsignal dem Ausgang A der Schaltungsanordnung zugeführt werden können, um als Kleinbild in dem Großbild auf dem Bildschirm dargestellt werden zu können.

Da der Lesezeiger R2 eine höhere Taktrate als der Schreibzeiger W aufweist, kann es, je nach Phasenlage der Signale der ersten Quelle und der zweiten Quelle, dazu kommen, daß der Lesezeiger R2 den Schreibzeiger W überholt. Das bedeutet, daß nun das noch im Halbbildspeicher Sp stehende, noch nicht überschriebene Halbbild, das in einem anderen Wiedergaberaster als das aktuelle Halbbild dargestellt werden müßte, ausgelesen und entsprechend im falschen Wiedergaberaster dargestellt wird, was zu Rasterverzerrungen führt. Um diese Rasterverzerrungen zu vermeiden, wird das von der Speichersteuerschaltung St erzeugte Leseadressensignal R1 mittels der Leseadressenkorrekturschaltung RK korrigiert und als Lesezeiger R2 dem Halbbildspeicher Sp zugeführt. Die Leseadressenkorrekturschaltung RK ist dabei von einem Korrektursignal KOR beaufschlagt, das von einer Logikschaltung LS in Abhängigkeit von dem an deren ersten Eingang e1 anliegenden Schreibzeiger W, dem an deren zweiten Eingang e2 anliegenden Lesezeiger R2, dem an deren dritten Eingang e3 anliegenden Ausgangssignal einer Rastererkennungsschaltung RE und dem an deren vierten Eingang e4 anliegenden Ausgangssignal einer Halbbilderkennungschaltung HE erzeugt wird. Die Rastererkennungsschaltung RE wird von dem am ersten Eingang E1 der Schaltungsanordnung anliegenden Signal der ersten Quelle beaufschlagt und gibt somit das Wiedergaberaster dieses Signals an. Die Halbbilderkennungsschaltung HE wird vom am zweiten Eingang E2 der Schaltungsanordnung anliegenden Signal der zweiten Quelle sowie vom Schreibzeiger W und vom Lesezeiger R2 beaufschlagt und gibt das soeben ausgegebene Halbbild A; B an. Dabei ermittelt sie aus dem Halbbild, das soeben eingelesen wird, und aus dem Vorzeichen der Differenz zwischen dem vorhergehenden Schreibzeiger W, also der Schreibadresse des vorhergehenden Bildpunkts, und dem momentanen Lesezeiger R2, also der korrigierten Leseadresse des soeben ausgelesenen Bildpunkts, das soeben ausgelesene Halbbild.

Die Logikschaltung LS kann dabei mittels eines Speichers gebildet sein, in den eine Zuordnungstabelle eingeschrieben ist, oder aber fest verdrahtet sein, wobei die entsprechende Schaltung die Zuordnungstabelle realisiert. Das am Ausgang a der Logikschaltung LS anliegende Signal KOR kann durch eine Folge von Korrekturwerten, die jeweils einer der vier Spalten nachfolgender Tabelle entnommen werden, gegeben sein, je nachdem, welches Korrektursignal durch die Logikschaltung LS realisiert ist.

| Wiedergaberaster | ausgelesenes Halbbild | Lese- und Schreibadresse | KOR1 | KOR2 | KOR3 | KOR 4 |
|---|---|---|---|---|---|---|
| | | | | | | |
| α | A | R2 ≤ W | -1 | 0 | 0 | -1 |
| α | B | R2 > W | -1 | 0 | 0 | -1 |
| β | B | R2 ≤ W | -1 | 0 | 0 | -1 |
| β | A | R2 > W | 0 | +1 | +1 | 0 |
| α | B | R2 ≤ W | -1 | -1 | 0 | 0 |
| α | A | R2 > W | 0 | 0 | +1 | +1 |
| β | A | R2 ≤ W | 0 | 0 | +1 | +1 |
| β | B | R2 > W | 0 | 0 | +1 | +1 |

In der Tabelle wird jeweils zwischen dem Fall, daß der momentane Lesezeiger R2 kleiner oder gleich dem vorhergehenden Schreibzeiger W ist und dem Fall, daß der momentane Lesezeiger R2 größer als der vorhergehende Schreibzeiger ist, unterschieden. Das ist jedoch völlig äquivalent einer Unterscheidung zwischen dem Fall, daß der momentane Lesezeiger R2 kleiner als der nachfolgende Schreibzeiger W ist und dem Fall, daß der momentane Lesezeiger R2 größer oder gleich dem nachfolgenden Schreibzeiger W ist.

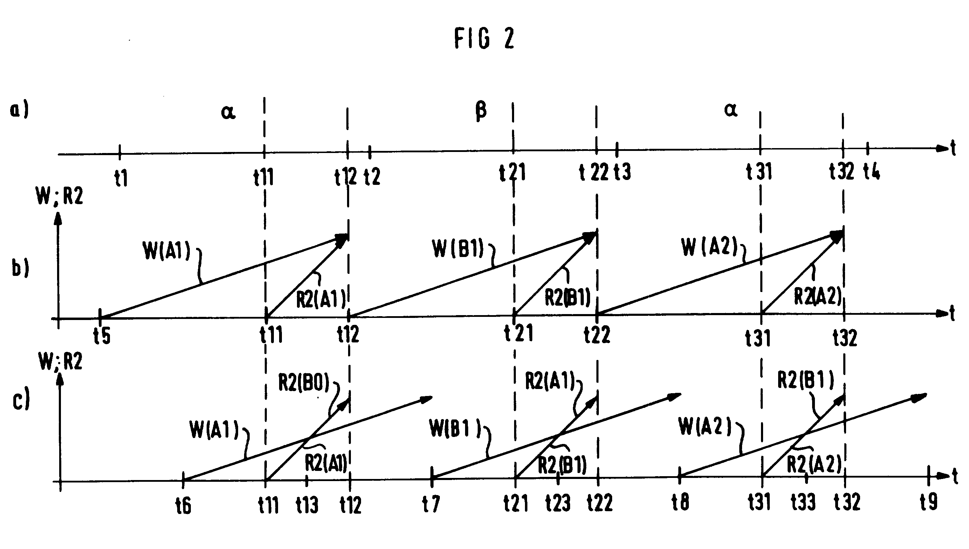

Mit Hilfe der Figuren 2 bis 5 soll nun das erfindungsgemaße Verfahren, nach dem die erfindungsgemaße Schaltungsanordnung gemäß Figur 1 arbeitet, beschrieben werden. So ist in Figur 2a stark schematisiert die zeitliche Abfolge der Wiedergaberaster α, β, α dargestellt. Jedes Wiedergaberaster α; β hat jeweils eine Dauer von 20 ms zwischen den Zeitpunkten t1 und t2, t2 und t3, t3 und t4, während der jeweils ein Halbbild des Großbilds auf dem Bildschirm zur Darstellung kommt. In das Großbild wird jeweils, bezogen auf die entsprechenden Zeilen, während der Zeiten t11 und t12, t21 und t22, t31 und t33 ein Kleinbild eingeblendet.

In den Figuren 2b und 2c sind jeweils der Schreibzeiger W und der Lesezeiger R2 für verschiedene mögliche Phasenlagen des Signals der zweiten Quelle zum Signal der ersten Quelle dargestellt. So beginnt in der Darstellung gemäß Figur 2b ein Halbbild der zweiten Quelle vor dem der ersten Quelle, während in der Darstellung gemäß Figur 2c das Halbbild der zweiten Quelle nach dem der ersten Quelle beginnt.

In Figur 2b wird beginnend mit dem Zeitpunkt t5 ein Halbbild A1 mittels des Schreibzeigers W in den Halbbildspeicher Sp eingeschrieben. Die Ordinate der Darstellung in den Figuren 2b und 2c kennzeichnet dabei die Schreibadresse W bzw. die Leseadresse R2. Dieses Halbbild A1 muß einem Wiedergaberaster α zugeordnet werden, um rasterrichtig dargestellt werden zu können. Zum Zeitpunkt t12 ist der Schreibvorgang des Halbbilds A1 beendet und es beginnt ein neuer Schreibvorgang des nächsten Halbbilds B1, der bis zum Zeitpunkt t22 dauert. Das Halbbild B1 muß zur rasterrichtigen Darstellung einem Wiedergaberaster β zugeordnet werden.

Entsprechend Figur 2a beginnt zum Zeitpunkt t11 ein Lesevorgang. Da das Auslesen mit höherer Taktrate erfolgen muß als das Einschreiben, weist der Lesezeiger R2 eine größere Steilheit auf als der Schreibzeiger W. Da der Schreibvorgang mit dem Ende der Kleinbilddarstellung zum Zeitpunkt t12 zusammenfällt, wird während des Lesevorgangs nur das zuvor eingeschriebene Halbbild A1 und danach das Halbbild B1 usw. ausgelesen und im jeweils richtigen Raster dargestellt.

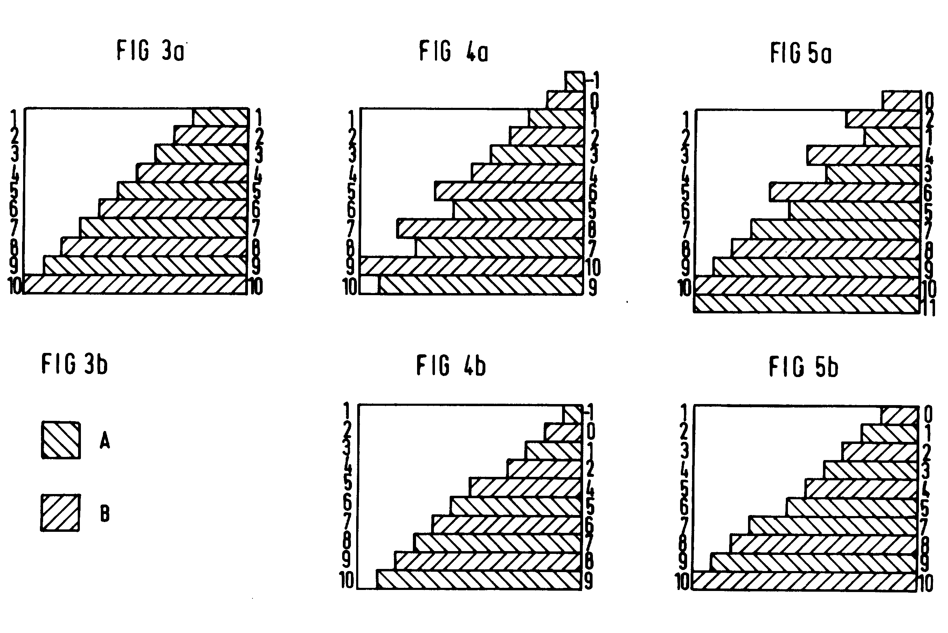

Die Bildschirmdarstellung dieses Vorgangs ist in Figur 3a, stark schematisiert, anhand eines von links unten nach rechts oben verlaufenden Schwarz-Weiß-Übergangs gezeigt. Es ist dort ein Kleinbild mit einer Vollbildauflösung von 10 Zeilen dargestellt, was bedeutet, daß ein Halbbild jeweils 5 Zeilen aufweist. Am linken Rand ist die Numerierung der Rasterzeilen angegeben, wobei die ungeraden Zeilen dem Wiedergaberaster α und die geraden Zeilen dem Wiedergaberaster β zugeordnet sind. Am rechten Rand ist die Numerierung der Zeilen der jeweiligen Halbbilder A und B angegeben, wobei die ungeraden Ziffern dem Halbbild A und die geraden Ziffern dem Halbbild B zugeordnet sind. Das Halbbild A ist gemäß Figur 3b mit einer von links oben nach rechts unten verlaufenden Schraffur und das Halbbild B mit einer von links unten nach rechts oben verlaufenden Schraffur dargestellt.

In Figur 3a sind, wie ja bereits in der Erläuterung zu Figur 2b ausgeführt wurde, die Halbbilder A und B jeweils in ihrem richtigen Wiedergaberaster α und β dargestellt, wodurch keine Rasterverzerrungen auftreten.

Wenn hingegen, wie in Figur 2c dargestellt, das Einschreiben eines Kleinbilds in den Halbbildspeicher Sp erst nach dem Anfang der Darstellung eines Großbildhalbbilds beginnt, so führt das dazu, daß der Lesezeiger R2 den Schreibzeiger W überholt. So beginnt, wie im linken Teil der Figur 2c dargestellt ist, zum Zeitpunkt t6 der Einschreibvorgang eines Halbbilds A1, der bis zum Zeitpunkt t7 dauert, wo dann der Einschreibvorgang eines Halbbilds B1 beginnt usw.. Wiederum zum Zeitpunkt t11 beginnt dann der Lesevorgang, der zum Zeitpunkt t12 zu Ende ist. Zum Zeitpunkt t13 überholt der Lesezeiger R2 den Schreibzeiger W. Das führt dazu, daß zunächst das zum Wiedergaberaster α gehörige Halbbild A1 ausgelesen wird, ab dem Zeitpunkt t13 jedoch das noch nicht neu überschriebene Halbbild B0, das eigentlich im Wiedergaberaster β dargestellt werden müßte.

Figur 4a zeigt diesen Vorgang stark schematisiert anhand einer Bildschirmdarstellung. Zunächst werden also die Zeilen 1 und 3 des Halbbilds A1 in die Zeilen 1 und 3 des Wiedergaberasters α richtig dargestellt. Dann werden jedoch die Zeilen 6, 8 und 10 des Halbbilds B0 in den Zeilen 5, 7 und 9 des Wiedergaberasters α dargestellt. Danach werden die Zeilen 2 und 4 des Halbbilds B1 in den Zeilen 2 und 4 des Wiedergaberasters β richtig dargestellt und dann wieder die Zeilen 5, 7 und 9 des Halbbilds A1 in den Zeilen 6, 8 und 10 des Rasters β. Das führt bei der schrägen Kante, wie sie bereits in Figur 3a dargestellt wurde, zu der Rasterverzerrung im unteren Teil der Figur 4a.

In Figur 4b ist nun dargestellt, wie durch eines der erfindungsgemäßen Verfahren diese Rasterverzerrungen vermieden werden können. Dazu wurde das Korrektursignal KOR1 gemäß der Tabelle verwendet. Dafür ist es jedoch notwendig, eine zusätzliche Zeile pro Halbbild abzuspeichern, und zwar eine vom Anfang des Bildes, was in Figur 4a durch die zusätzlichen Halbbildzeilen -1 und 0 angedeutet ist.

Gemäß dem Korrektursignal KOR1 wird zunächst im Wiedergaberaster α, solange die Leseadresse R2 kleiner als die Schreibadresse W ist, also im Zeitraum zwischen t11 und t13 gemäß Figur 2c, das Halbbild A1 dargestellt, wobei jeweils die davorliegende Zeile dargestellt wird. Das bedeutet, daß die Zeilen -1 und 1 des Halbbilds A1 in den Zeilen 1 und 3 des Wiedergaberasters α abgebildet werden.

Wenn dann die Leseadresse R2 größer als die Schreibadresse W wird, also im Zeitraum zwischen t13 und t12, werden die Zeilen 4, 6 und 8 des Halbbilds B0 in den Zeilen 5, 7 und 9 des Wiedergaberasters α abgebildet; es wird dabei wieder die davorliegende Zeile abgebildet. Anschließend werden dann in den Zeilen 2 und 4 des Wiedergaberasters β die Zeilen 0 und 2 des Halbbilds B1 dargestellt und dann, ohne Korrektur der Leseadresse, die Zeilen 5, 7 und 9 des Halbbilds A1 in den Zeilen 6, 8 und 10 des Wiedergaberasters β . Durch diese erfindungsgemäße teilweise Vertauschung von Zeilen wird erreicht, daß für den Betrachter trotz einer teilweisen Darstellung von Halbbildern im falschen Raster eine unverzerrte Kante erscheint, wobei die kleine Unregelmäßigkeit zwischen den Rasterzeilen 4 und 5 in Figur 4b bei höherer Zeilenzahl nicht erkennbar ist.

Wenn in Figur 2c statt der Halbbildfolge A1, B1, A2..., wie sie dort gezeigt ist, eine Halbbildfolge B1, A2, B2... gewählt würde, würde das bei einer Bildschirmdarstellung ohne Korrektursignal dazu führen, daß zunächst, wie in Figur 5 wiederum stark schematisiert dargestellt ist, in den Zeilen 1, 3 und 5 des Wiedergaberasters α die Zeilen 2, 4 und 6 des Halbbilds B1 dargestellt werden. Nachdem die Leseadresse R2 größer als die Schreibadresse W geworden ist, würden dann die Zeilen 7 und 9 eines Halbbilds A1 in den Zeilen 7 und 9 des Wiedergaberasters α abgebildet werden. Im Wiedergaberaster β würden zunächst in den Zeilen 2, 4 und 6 die Zeilen 1, 3 und 5 eines Halbbilds A2 und dann in den Zeilen 8 und 10 die Zeilen 8 und 10 des Halbbilds B1 abgebildet werden usw.. In Figur 5b ist dann die für den Fachmann leicht nachvollziehbare Darstellung dieses Falls mit dem Korrektursignal KOR2 gemäß der Tabelle gezeigt.

Wie den Figuren 4b und 5b zu entnehmen ist, werden durch die Zeilenvertauschungen der erfindungsgemäßen Verfahren im Kleinbild schräg verlaufende Kanten wieder deutlich, ohne Zick-Zack-Verzerrungen dargestellt. Dazu ist lediglich notwendig, zusätzliche Zeilen des Kleinbilds, also des Signals der zweiten Quelle abzuspeichern, wobei bei den Verfahren mit dem Korrektursignal KOR1 eine frühere Zeile pro Halbbild zusätzlich abgespeichert werden muß, bei den Verfahren mit den Korrektursignalen KOR2 und KOR4 eine frühere und eine spätere Zeile und bei dem Verfahren mit dem Korrektursignal KOR3 nur eine spätere Zeile. Es ist also zweckmäßig, eines der Verfahren mit dem Korrektursignal KOR1 oder KOR3 zu verwenden.

## Patentansprüche

1. Verfahren zur Bildkorrektur bei einer Bild-in-Bild-Darstellung von zeilenverkämmten Fernseh- oder Videosignalen mit folgenden Merkmalen:
- ein Großbild wird mittels aufeinanderfolgender Halbbilder in jeweils verschiedenen Wiedergaberastern (α, β) dargestellt,
- ein in das Großbild einzublendendes, ebenfalls aus aufeinanderfolgenden Halbbildern (A, B) bestehendes Videosignal wird asynchron zum Großbild empfangen und bildpunktreduziert als Kleinbild mittels von einer Speichersteuerschaltung (St) erzeugter Schreibadressen (W) in einen Halbbildspeicher (Sp) eingeschrieben, wobei ein bereits in den Halbbildspeicher (Sp) eingeschriebenes Halbbild durch das jeweils nachfolgende Halbbild überschrieben wird,
- im Zyklus der Großbildwiedergaberaster (α, β) wird der Halbbildspeicher (Sp) zur Einblendung in das Großbild mittels von der Speichersteuerschaltung (St) erzeugter Leseadressen (R1, R2) ausgelesen,
- die von der Speichersteuerschaltung (St) erzeugten Leseadressen (R1) werden in Abhängigkeit von dem momentanen Großbildwiedergaberaster (α, β), dem momentan ausgelesenen Halbbild (A, B) und dem Vorzeichen der Differenz zwischen der vorhergehenden Schreibadresse (W) und der momentanen Leseadresse (R2) durch einen Korrekturwert derart verändert, daß das momentan ausgelesene Halbbild (A, B) entweder unverändert gelassen (0) oder um eine Zeile erhöht (+1) oder erniedrigt (-1) wird,
- der Korrekturwert wird von einer Logikschaltung erzeugt gemäß nachfolgender Tabelle:
| Wiedergabe-raster | ausgelesenes Halbbild | Lese- und Schreib- adresse | Korrekturwert gemäß | | | |
|---|---|---|---|---|---|---|
| | | | erster | zweiter | dritter | vierter |
| | | | Korrekturwertspalte | | | |
| α | A | R2 ≤ W | -1 | 0 | 0 | -1 |
| α | B | R2 > W | -1 | 0 | 0 | -1 |
| β | B | R2 ≤ W | -1 | 0 | 0 | -1 |
| β | A | R2 > W | 0 | +1 | +1 | 0 |
| α | B | R2 ≤ W | -1 | -1 | 0 | 0 |
| α | A | R2 > W | 0 | 0 | +1 | +1 |
| β | A | R2 ≤ W | 0 | 0 | +1 | +1 |
| β | B | R2 > W | 0 | 0 | +1 | +1 |
- wobei verschiedene Korrekturwerte nur einer einzigen der ersten, zweiten, dritten oder vierten Korrekturwertspalte entnommen werden.

2. Schaltungsanordnung zur Durchführung eines der Verfahren gemäß Anspruch 1
- mit einem ersten Signalpfad (1) für das Großbildsignal, der mit einem ersten Eingang (E1) der Schaltungsanordnung und über einen Schalter (3) mit einem Ausgang (A) der Schaltungsanordnung verbunden ist,
- mit einem zweiten Signalpfad (2) für das Kleinbildsignal, der mit einem zweiten Eingang (E2) der Schaltungsanordnung und über den Schalter (3) mit dem Ausgang (A) der Schaltungsanordnung verbunden ist, wobei der zweite Signalpfad (2) in Reihe geschaltet einen A/D-Wandler (A/D), ein Dezimationsfilter (DF), einen Halbbildspeicher (Sp) und einen D/A-Wandler (D/A) umfaßt und wobei der Halbbildspeicher (Sp) durch eine Speichersteuerschaltung (St) mit Schreibadressen (W) und Leseadressen (R2) steuerbar ist,
- mit einer Leseadressenkorrekturschaltung (RK), die zwischen der Speichersteuerschaltung (St) und dem Halbbildspeicher (Sp) angeordnet ist und deren Adreßsteuerung durch ein Korrektursignal (KOR) zur Verschiebung des momentan ausgelesenen Halbbilds (A, B) veränderbar ist, und
- mit einer Logikschaltung (LS), die vier Eingänge (e1, e2, e3, e4) und einen Ausgang (a) aufweist, deren erster Eingang (e1) durch die Schreibadressen (W) steuerbar ist, deren zweiter Eingang (e2) durch die korrigierten Leseadressen (R2) steuerbar ist, deren dritter Eingang (e3) mit einer Rastererkennungsschaltung (RE) verbunden ist, wobei die Rastererkennungsschaltung (RE) mit dem ersten Eingang (E1) der Schaltungsanordnung verbunden ist, deren vierter Eingang (e4) mit einer Halbbilderkennungsschaltung (HE) verbunden ist, wobei die Halbbilderkennungsschaltung (HE) mit dem zweiten Eingang (E2) der Schaltungsanordnung verbunden ist und durch die Schreibadressen (W) und die korrigierten Leseadressen (R2) steuerbar ist, und deren Ausgang (a) mit der Leseadressenkorrekturschaltung (RK) verbunden ist, wobei durch die Logikschaltung (LS) in Abhängigkeit von den an ihren Eingängen (e1, e2, e3, e4) anliegenden Signalen gemäß der Tabelle das Korrektursignal (KOR) erzeugbar ist, wobei das Korrektursignal (KOR) Korrekturwerte aus einer einzigen der Korrekturwertspalten aufweist.

3. Verwendung zumindest eines der Verfahren gemäß Anspruch 1 oder der Schaltungsanordnung gemäß Anspruch 2 in einem Fernseh- oder Videogerät.

## Claims

1. Method for picture correction in a picture-in-picture display of line-interlaced television or video signals, having the following features:
- a large picture is displayed by means of successive fields in respectively different reproduction rasters (α, β),
- a video signal which is to be inserted into the large picture and likewise comprises successive fields (A, B) is received asynchronously with respect to the large picture and is written in a pixel-reduced manner as a small picture to a field memory (Sp) by means of write addresses (W) generated by a memory control circuit (St), a field that has already been written to the field memory (Sp) being overwritten by the respectively succeeding field,
- in the cycle of the large-picture reproduction rasters (α, β), the field memory (Sp) is read out for the purpose of insertion into the large picture by means of read addresses (R1, R2) generated by the memory control circuit (St),
- the read addresses (R1) generated by the memory control circuit (St) are altered by a correction value as a function of the instantaneous large-picture reproduction raster (α, β), the instantaneously read-out field (A, B) and the sign of the difference between the preceding write address (W) and the instantaneous read address (R2), in such a way that the instantaneously read-out field (A, B) is either left unchanged (0) or incremented (+1) by one line or decremented (-1) by one line,
- the correction value is generated by a logic circuit in accordance with the following table:
| Reproduction Raster | Field Read Out | Read and Write Address | Correction Value According to | | | |
|---|---|---|---|---|---|---|
| | | | First | Second | Third | Fourth |
| | | | Correction Value Column | | | |
| α | A | R2 ≤ W | -1 | 0 | 0 | -1 |
| α | B | R2 > W | -1 | 0 | 0 | -1 |
| β | B | R2 ≤ W | -1 | 0 | 0 | -1 |
| β | A | R2 > W | 0 | +1 | +1 | 0 |
| α | B | R2 ≤ W | -1 | -1 | 0 | 0 |
| α | A | R2 > W | 0 | 0 | +1 | +1 |
| β | A | R2 ≤ W | 0 | 0 | +1 | +1 |
| β | B | R2 > W | 0 | 0 | +1 | +1 |
- different correction values being taken only from either the first, second, third or fourth correction value column.

2. Circuit arrangement for carrying out one of the methods according to Claim 1,
- having a first signal path (1) for the large-picture signal, which path is connected to a first input (E1) of the circuit arrangement and is connected via a switch (3) to an output (A) of the circuit arrangement,
- having a second signal path (2) for the small-picture signal, which path is connected to a second input (E2) of the circuit arrangement and is connected via the switch (3) to the output (A) of the circuit arrangement, the second signal path (2) comprising, connected in series, an A/D converter (A/D), a decimation filter (DF), a field memory (Sp) and a D/A converter (D/A), and it being possible for a memory control circuit (St) to control the field memory (Sp), by means of write addresses (W) and read addresses (R2),
- having a read address correction circuit (RK), which is arranged between the memory control circuit (St) and the field memory (Sp) and whose address control can be altered by a correction signal (KOR) for the purpose of shifting the instantaneously read-out field (A, B) and
- having a logic circuit (LS), which has four inputs (e1, e2, e3, e4) and one output (a), the first input (e1) of which logic circuit can be controlled by the write addresses (W), the second input (e2) of which logic circuit can be controlled by the corrected read addresses (R2), the third input (e3) of which logic circuit is connected to a raster identification circuit (RE), the raster identification circuit (RE) being connected to the first input (E1) of the circuit arrangement, the fourth input (e4) of which logic circuit is connected to a field identification circuit (HE), the field identification circuit (HE) being connected to the second input (E2) of the circuit arrangement and being controllable by the write addresses (W) and the corrected read addresses (R2), and the output (a) of which logic circuit is connected to the read address correction circuit (RK), it being possible for the logic circuit (LS) to generate the correction signal (KOR) in accordance with the table as a function of the signals present at the inputs (e1, e2, e3, e4) of the said logic circuit, the correction signal (KOR) having correction values from a single column of the correction value columns.

3. Use of at least one of the methods according to Claim 1 or of the circuit arrangement according to Claim 2 in a television set or video device.

## Revendications

1. Procédé pour la correction d'image dans un affichage d'image dans l'image de signaux entrelacés de télévision ou de vidéo, ayant les caractéristiques suivantes :
- on affiche une grande image au moyen de trames consécutives dans des créneaux de reproduction (α, β) à chaque fois différents,
- on reçoit, de manière asynchrone par rapport à la grande image, un signal vidéo à insérer dans la grande image et également constitué de trames consécutives (A, B) et, réduit en nombre de points d'image, on l'écrit comme petite image au moyen d'adresses d'écriture (W), produites par un circuit de commande de mémoire (St), dans une mémoire de trame (Sp), une trame déjà écrite dans la mémoire de trame (Sp) étant recouverte par la trame suivante,
- dans le cycle du créneau de reproduction de grande image (α, β), on lit la mémoire de trame (Sp) au moyen d'adresses de lecture (R1, R2) produites par le circuit de commande de mémoire (St) en vue de l'insertion dans la grande image,
- on modifie les adresses de lecture (R1) produites par le circuit de commande de mémoire (St), en fonction du créneau de reproduction de grande image (α, β) momentané, de la trame (A, B) lue momentanément et du signe de la différence entre l'adresse d'écriture (W) précédente et l'adresse de lecture (R2) momentanée, avec une valeur de correction de manière à laisser inchangée (0) la trame (A, B) lue momentanément, à l'augmenter (+ 1) d'une ligne ou à la diminuer (- 1) d'une ligne,
- on produit la valeur de correction au moyen d'un circuit logique (LS) selon le tableau suivant :
| Créneau de reproduction | Trame lue | Adresses de lecture et d'écriture | Valeur de correction selon la | | | |
|---|---|---|---|---|---|---|
| | | | première | deuxième | troisième | quatrième |
| | | | colonne de valeurs de correction | | | |
| α | A | R2 ≤ W | - 1 | 0 | 0 | - 1 |
| α | B | R2 > W | - 1 | 0 | 0 | - 1 |
| β | B | R2 ≤ W | - 1 | 0 | 0 | - 1 |
| β | A | R2 > W | 0 | + 1 | + 1 | 0 |
| α | B | R2 ≤ W | - 1 | - 1 | 0 | 0 |
| α | A | R2 > W | 0 | 0 | + 1 | + 1 |
| β | A | R2 ≤ W | 0 | 0 | + 1 | + 1 |
| β | B | R2 > W | 0 | 0 | + 1 | + 1 |
- diverses valeurs de correction étant extraites d'une seule des première, deuxième, troisième ou quatrième colonnes de valeurs de correction.

2. Dispositif pour la mise en oeuvre d'une des procédés selon la revendication 1, comportant
- une première voie de signal (1) qui est destinée au signal de grande image et qui est reliée à une première entrée (E1) du dispositif et, par l'intermédiaire d'un commutateur (3), à une sortie (A) du dispositif,
- une deuxième voie de signal (2) qui est destinée au signal de petite image et qui est reliée à une deuxième entrée (E2) du dispositif et, par l'intermédiaire du commutateur (3), à la sortie (A) du dispositif, la deuxième voie de signal (2) comprenant, branchés en série, un convertisseur analogique-numérique (A/D), un filtre de décimation (DF), une mémoire de trame (Sp) et un convertisseur numérique-analogique (D/A) et la mémoire de trame (Sp) pouvant être commandée par un circuit de commande de mémoire (St) par des adresses d'écriture (W) et des adresses de lecture (R2),
- un circuit de correction d'adresse de lecture (RK), qui est disposé entre le circuit de commande de mémoire (St) et la mémoire de trame (Sp) et dont la commande d'adresse peut être modifiée par un signal de correction (KOR) pour décaler la trame (A, B) lue dans l'instant, et
- un circuit logique (LS), qui a quatre entrées (e1, e2, e3, e4) et une sortie (a), dont la première entrée (el) peut être commandée par les adresses -d'écritures (W), dont la deuxième entrée (e2) peut être commandée par les adresses de lecture corrigées (R2), dont la troisième entrée (e3) est reliée à un circuit de détection de créneau (RE) qui est lui-même relié à la première entrée (E1) du dispositif, dont la quatrième entrée (e4) est reliée à un circuit de détection de trame (HE) qui est lui-même relié à la deuxième entrée (E2) du dispositif et qui peut être commandé par les adresses d'écriture (W) et par les adresses de lecture corrigées (R2), et dont la sortie (a) est reliée au circuit de correction d'adresse de lecture (RK), le circuit logique (LS) produisant selon le tableau et en fonction des signaux appliqués à ses entrées (e1, e2, e3, e4) le signal de correction (KOR) qui présente des valeurs de correction d'une seule des colonnes de valeurs de correction.

3. Utilisation d'au moins l'un des procédés selon la revendication 1 ou du dispositif selon la revendication 2 dans un téléviseur ou dans un magnétoscope.
